(19) Europäisches Patentamt
European Patent Office
Office européen des brevets

(11) Veröffentlichungsnummer: **0 043 932**
**B1**

(12) # EUROPÄISCHE PATENTSCHRIFT

(45) Veröffentlichungstag der Patentschrift: **18.04.84**

(51) Int. Cl.³: **C 09 B 67/20**, C 09 B 67/22, C 09 D 7/00

(21) Anmeldenummer: **81104687.9**

(22) Anmeldetag: **19.06.81**

(54) **Flüssige, stabile Zubereitungen von Kupferphthalocyaninpigmenten oder Indanthron und deren Verwendung.**

(30) Priorität: **15.07.80 DE 3026697**

(43) Veröffentlichungstag der Anmeldung: **20.01.82 Patentblatt 82/3**

(45) Bekanntmachung des Hinweises auf die Patenterteilung: **18.04.84 Patentblatt 84/16**

(84) Benannte Vertragsstaaten: **CH DE FR GB IT LI**

(56) Entgegenhaltungen:
**FR - A - 2 307 022**
**GB - A - 2 009 205**

(73) Patentinhaber: **BASF Aktiengesellschaft, Carl-Bosch-Strasse 38, D-6700 Ludwigshafen (DE)**

(72) Erfinder: **Fechner, Wolf Dieter, Raiffeisenstrasse 22, D-6711 Dirmstein (DE)**
Erfinder: **Kranz, Joachim, Dr., Rheinrugenstrasse 22, D-6700 Ludwigshafen (DE)**
Erfinder: **Polster, Rudolf, Dr., Carostrasse 43, D-6710 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 043 932 B1

# Flüssige, stabile Zubereitungen von Kupferphthalocyaninpigmenten oder Indanthron und deren Verwendung

Die Erfindung betrifft neue, flüssige, stabile Zubereitungen von Kupferphthalocyaninpigmenten oder Indanthron und deren Verwendung.

Zur Herstellung von Druck- und Lackfabren werden häufig Zubereitungen von Pigmenten in mit Druck- und/oder Lackfarben verträglichen Lösungsmitteln oder Bindemittellösungen hergestellt und verwendet. Damit die Zubereitungen Pigmente mit hoher Farbstärke enthalten, müssen sehr feinteilige Pigmente verwendet werden. Solche Zubereitungen haben jedoch den Nachteil, dass diese bereits in der Regel bei Pigmentgehalten von um 10 Gew.-% nicht mehr fliessfähig sind.

Da man andererseits möglichst konzentrierte Zubereitungen verwenden muss, um bei der Herstellung der Farben in der Auswahl der Bindemittel und der hierfür erforderlichen Lösungsmittel nicht festgelegt zu sein, werden solche Zubereitungen in der Regel in der Form von höherkonzentrierten Pasten angewendet. Für die technische Anwendung wäre es ein grosser Vorteil, wenn 20 bis 40 gew.%ige Zubereitungen von feinteiligen Pigmenten in organischen Flüssigkeiten eine fliessfähige bis flüssige Konsistenz aufweisen würden.

Aufgabe der vorliegenden Erfindung war es, flüssige, stabile, bindemittelfreie Pigmentzubereitungen aufzufinden, die das Pigment in einer stabilisierten Form enthalten, so dass beim Verdünnen keine Flockung erfolgt.

Es wurde gefunden, dass flüssige, stabile Zubereitungen vorliegen, wenn diese

a) feinteiliges Kupferphthalocyanin der α- oder β-Modifikation oder feinteiliges Indanthron,

b) mindestens eine $C_6$- bis $C_{18}$-Alkylbenzolsulfonsäure,

c) ein basisches Kupferphthalocyanin der Formel

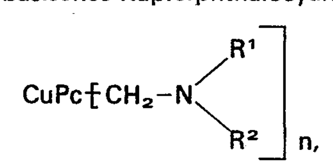

in der CuPc ein n-wertiger Rest des Kupferphthalocyanins, $R^1$ und $R^2$ unabhängig voneinander Wasserstoff oder $C_1$- bis $C_8$-Alkyl und n 1, 2, 3 oder 4 bedeuten,

d) Verbindungen, die durch Mannich-Kondensation aus 2-Hydroxynaphthalin, das gegebenenfalls noch 1 oder 2 weitere β-ständige Hydroxygruppen enthält, Formaldehyd und primären oder sekundären aliphatischen, cycloaliphatischen oder aromatischen Mono-, Di-, Tri- oder Polyaminen oder 5- oder 6gliedrigen heterocyclischen Verbindungen, die eine NH-Gruppe als Ringglied aufweisen, erhalten werden und die 1 bis 6 β-Hydroxynaphthylgruppen enthalten, und

e) eine oder mehrere organische Flüssigkeiten enthalten,

wobei das Gewichtsverhältnis von b:c:d 1:1:1 bis 2,5:1,25:1 ist und die Menge an d 10 bis 50 Gew.-%, bezogen auf a, beträgt.

Mit den erfindungsgemässen Zubereitungen erhält man Lackfarben, die im Vergleich zum Stand der Technik deutlich verbesserte Eigenschaften aufweisen. Die so hergestellten Lackfarben geben sehr farbstarke Überzüge mit hohem Glanz und hoher Lasur. Die Pigmente zeigen ein sehr gutes Fliess- und *rub-out*-Verhalten sowie hohe Farbstärke bei gleichzeitig hoher Brillanz. Die neuen Zubereitungen sind mit den verschiedensten Bindemittelsystemen, z.B. ofentrocknenden oder lufttrocknenden Bindemittelsystemen verträglich, so dass die Zubereitungen universell angewendet werden können.

Die erfindungsgemässen flüssigen Zubereitungen lassen sich durch einfaches Einrühren in die Bindemittelsysteme einarbeiten, ohne dass Flokkung des Pigments eintritt.

Gegenüber den aus der DE-AS Nr. 2516054 bekannten Zubereitungen, die als nächstliegender Stand der Technik anzusehen sind, weisen die Zubereitungen gemäss der vorliegenden Erfindung eine deutliche geringere Viskosität auf. Ausserdem geben die mit erfindungsgemässen Zubereitungen hergestellten Lacke Färbungen mit verbesserter Lasur und erhöhter Farbstärke.

Als Pigmente a enthalten die neuen Zubereitungen feinteiliges Kupferphthalocyanin (CuPc) der α- oder β-Modifikation oder feinteiliges Indanthron. Die Teilchengrösse der Pigmente liegt unterhalb 0,5 µm, vorzugsweise unterhalb 0,1 µm.

Die feinteiligen Pigmente werden nach bekannten Verfahren, z.B. durch Lösen in Säuren, wie konzentrierter Schwefelsäure, und Austragen der Lösung in viel Wasser, durch Mahlen des Rohpigmentes in Gegenwart oder Abwesenheit von Salz, z.B. in Kugelmühlen oder durch Kneten in Gegenwart von Salz und anschliessender Entfernung des Salzes mit Wasser, durch Mahlen gegebenenfalls in Gegenwart von inerten organischen Lösungsmitteln oder durch Mahlen in Wasser in Gegenwart von basisch wirkenden Mitteln oder Dispergiermitteln erhalten.

Das CuPc-Pigment kann bis zu 1 Chloratom im CuPc-Molekül enthalten.

Als Komponente b kommen $C_8$- bis $C_{18}$-Alkylbenzolsulfonsäuren in Betracht, wobei das Alkyl linear oder verzweigt sein kann. Im einzelnen sind z.B. zu nennen: 4-Octylbenzolsulfonsäure, 4-Nonylsulfonsäure, 4-Decylbenzolsulfonsäure, 4-Dodecylbenzolsulfonsäure, 4-Tetradecylbenzolsulfonsäure, 4-Hexadecylbenzolsulfonsäure, 4-Octadecylbenzolsulfonsäure oder Gemische dieser Säuren. Bevorzugt ist Dodecylbenzolsulfonsäure.

Als basische CuPc-Verbindungen c kommen solche der Formel

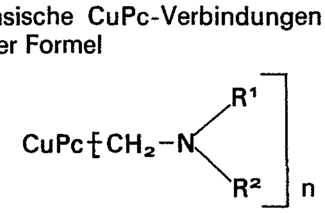 (I)

in Betracht. In der Formel bedeuten CuPc einen

n-wertigen Kupferphthalocyaninrest, n 1, 2, 3 oder 4, $R^1$ und $R^2$ unabhängig voneinander Wasserstoff oder $C_1$- bis $C_8$-Alkyl.

Die Verbindungen der Formel I sind bekannt und werden z.B. durch Umsetzen der entsprechenden Chlormethyl/CuPc-Verbindungen mit Ammoniak oder den entsprechenden primären oder sekundären Alkylaminen hergestellt. Man kann auch erst die entsprechenden Verbindungen der Formel I mit $R^1=R^2=H$ herstellen und diese alkylieren. Als Alkylierungsmittel kommen die entsprechenden Alkylhalogenide, vorzugsweise die Chloride oder Bromide, die entsprechenden Schwefelsäureester oder die entsprechenden Ester von aromatischen Sulfonsäuren in Betracht.

Als Komponente c sind solche bevorzugt, bei denen mindestens einer der Reste $R^1$ und $R^2$ Äthyl, Propyl oder Butyl und n im Mittel 2,5 bis 4 ist. In der Regel liegt c in Form eines Gemisches aus Verbindungen der Formel I mit n=2, 3 und 5 vor.

Wesentlicher Bestandteil der neuen Zubereitungen ist die Komponente d; die durch Mannich-Kondensation von 2-Hydroxynaphthalin, das gegebenenfalls noch 1 oder 2 weitere β-ständige OH-Gruppen trägt, Formaldehyd und primären oder sekundären aliphatischen, cycloaliphatischen oder aromatischen Mono-, Di-, Tri- oder Polyaminen oder 5- oder 6gliedrigen Heterocyclen, die eine NH-Gruppe als Ringglied aufweisen, erhalten wird, wobei das Kondensationsprodukt 1 bis 6 β-Hydroxynaphthylgruppen enthält.

Als 2-Hydroxynaphthaline kommen zur Herstellung von d neben 2-Hydroxynaphthalin, 2,7-Dihydroxynaphthalin und 2,3-Dihydroxynaphthalin in Betracht. Bevorzugt sind Kondensationsprodukte auf der Basis von 2-Hydroxynaphthalin und 2,7-Dihydroxynaphthalin.

Als zur Herstellung von d geeignete primäre und sekundäre Amine sind z.B. zu nennen: primäre und sekundäre, aliphatische und cycloaliphatische Monoamine, $C_2$- und $C_3$-Alkylendiamine, Di-$C_2$- und $C_3$-alkylentriamine und Poly-($C_2$- und $C_3$-alkylen)polyamine mit 3 bis 6 Alkylengruppen, cycloaliphatische Diamine, aromatische Diamine und 5- oder 6gliedrige gesättigte oder ungesättigte heterocyclische Verbindungen, die eine NH-Gruppe als Ringglied enthalten.

Die Verbindungen d sind bekannt oder werden in bekannter Weise hergestellt (Houben-Weyl, „Methoden der organischen Chemie", 4. Aufl., Bd. XI, S. 731 ff. [1957] Georg Thieme Verlag, Stuttgart).

Vorzugsweise werden als d Verbindungen der allgemeinen Formel

$$R^3-CH_2-X \qquad (II)$$

verwendet, in der $R^3$ für 2-Hydroxynaphthyl-1 das gegebenenfalls noch 1 oder 2 weitere β-ständige Hydroxylgruppen trägt, oder für

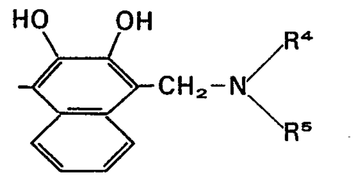

und X für einen Rest der Formel

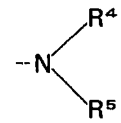 oder 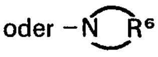 stehen,

worin $R^4$ und $R^5$ je einen aliphatischen oder phenylaliphatischen Rest, wobei $R^4$ und $R^5$ gleich oder verschieden sein können oder $R^5$ eine Gruppe der Formel $-CH_2-R^3$ und $R^4$ eine Gruppe der Formel

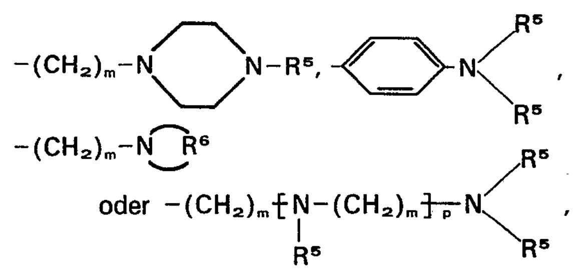

m 2 oder 3, p 0, 1 oder 2, $-\overset{\frown}{N}R^6$ einen gesättigten oder ungesättigten 5- oder 6gliedrigen heterocyclischen Ring, der gegebenenfalls $-O-$ oder $>N-R^7$ als weitere Ringglieder und/oder eine oder zwei $>C=O$-Gruppen enthält, und $R^7$ $C_1$- bis $C_4$-Alkyl bedeuten.

Für $R^4$ und $R^5$ sind als aliphatische und phenylaliphatische Reste z.B. zu nennen:

1. $C_1$ bis $C_5$-Alkyl, wie Methyl, Äthyl, Propyl, n- oder Isobutyl, Pentyl;
2. $C_1$ bis $C_8$-Alkoxy-$C_2$- und $C_3$-alkyl wie 2-Methoxyäthyl, 3-Methoxypropyl, 2-Äthoxyäthyl, 3-Äthoxypropyl, 2-n- oder -Propoxyäthyl, 3-n- oder i-Propoxypropyl, 2-n-Butoxyäthyl, 3-n-Butoxypropyl, 2-(2'-Äthylhexoxy)propyl;
3. Alkoxyalkoxy-$C_2$- und $C_3$-alkyl mit 3 bis 11 C-Atomen im Alkoxyalkoxy, 2-Methoxy-2-äthoxyäthyl, 2'-Methoxy-3-äthoxypropyl, 3'-Methoxy-3-propoxypopyl, 2'-Äthoxy-2-äthoxyäthyl, 2'-Äthoxy-3-äthoxypropyl, 3'-Äthoxy-3-propoxypopyl, 2'-Propoxy-2-äthoxyäthyl, 2'-Propoxy-3-äthoxypropyl, 3'-Propoxy-3-propoxypropyl, 2'-Butoxy-2-äthoxyäthyl, 2'-Butoxy-3-äthoxypropyl, 3'-Butoxy-3-propoxypropyl, 3'-(2''-Äthylhexoxy)-3-propoxypropyl;
4. Hydroxy-$C_2$- bis $C_3$-alkyl wie 2-Hydroxyäthyl, 2- oder 3-Hydroxypropyl;
5. N,N-Di-$C_1$- bis $C_4$-alkylamino-$C_2$- bis $C_3$-alkyl wie 2-(N,N-Dimethylamino)äthyl, 3-(N,N-Dimethylamino)propyl, 2-(N,N-Diäthylamino)-äthyl, 2-(N,N-Dibutylamino)äthyl, 3-(N,N-Diäthylamino)propyl, 3-(N,N-Dibutylamino)-propyl;
6. Phenyl-$C_1$- bis $C_4$-alkyl wie Benzyl, 2-Phenyläthyl, 2- und 3-Phenylpropyl;
7. $-C_2H_4-\overset{\frown}{N}R^6$ und $-C_3H_6-N\ R^6$, worin $-N\ R^6$ einen 5- oder 6gliedrigen gesättigten oder ungesättigten heterocyclischen Ring, der gegebenenfalls $-O-$ oder $> N-R^7$ als weitere Ringglieder und/oder eine oder zwei $>CO$-Gruppen aufweist und $R^7$ $C_1$- bis $C_4$-Alkyl bedeutet.

Als heterocyclische Reste kommen für 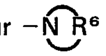 z.B. solche in Betracht, die sich vom Morpholin, Piperidin, Pyrrolidon, Pyrrolidin, Pyrazol, $N'-C_1$- bis $C_4$-Alkylpiperazin oder von Phthalimid ableiten.

Von den Verbindungen der Formel II sind solche bevorzugt, in denen $R^3$ für 2,7-Dihydroxynaphthyl-1 und 2-Hydroxynaphthyl-1 steht.

Von diesen Verbindungen der Formel II sind solche besonders bevorzugt, bei denen $R^3$ und $R^4$ die oben unter 1 bis 7 angegebene Bedeutung haben. Weiterhin sind Verbindungen der Formel II besonders bevorzugt, bei denen $R^3$= 2-Hydroxynaphthyl-1, 2,7-Dihydroxynaphthyl und X

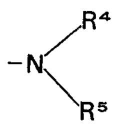

ist, wobei $R^5$ für den Rest $-CH_2-R^3$ und $R^4$ für Reste der Formeln

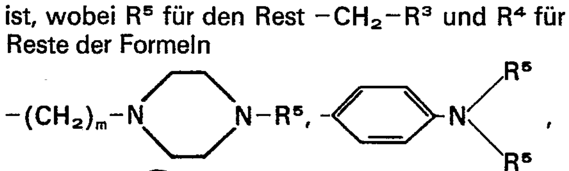

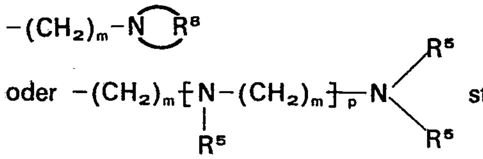

oder ... stehen,

worin m=2 oder 3, p=0,1 oder 2 sind und 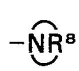 einen Rest bedeutet, der sich vom Morpholin oder Piperidin ableitet.

Ganz besonders bevorzugt sind aus wirtschaftlichen Gründen für d Verbindungen der Formeln IIIa und IIIb

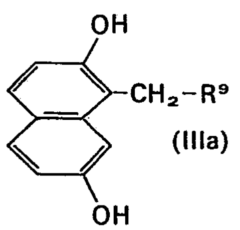

(IIIa)

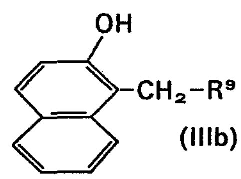

(IIIb)

in denen $R^9$ für N-Morpholinyl, N-Piperidinyl, N-Pyrrolidonyl, N-Pyrazolyl-, N-Phthalimido, n-(N'-Methylpyrazinyl) oder N-(N'-Äthylpyrazinyl) oder für Di-$C_1$- bis $C_4$-alkylamino wie Dimethylamino, Diäthylamino, Dipropylamino oder Dibutylamino, Di-(2-methoxyäthyl)amino, Di-(2-äthoxyäthyl)amino, Di-2-propoxyäthyl)amino, Di-2-butoxyäthyl)amino, Di-3-methoxypropyl)-amino, Di-3-äthoxypropyl)amino, Di-(3-butoxypropyl)amino, Di-(2-hydroxyäthylamino), Dibenzylamino steht.

Als organische Flüssigkeiten e kommen für die flüssigen Zubereitungen solche in Betracht, wie sie üblicherweise zur Herstellung von Lackfarben verwendet werden, z.B. $C_1$- bis $C_{18}$-Alkylbenzol wie Toluol, Xylole, $C_9$- bis $C_{11}$-Alkylbenzole, Carbonsäureester von Äthylenglykolmono-$C_1$- bis $C_4$-alkyläthern mit $C_2$- bis $C_4$-alkansäuren, wie Äthylenglykolmonoäthylätheracetat sowie Gemische dieser Flüssigkeiten.

Die Zubereitungen der vorliegenden Erfindung enthalten, bezogen auf a, 10 bis 50 Gew.-% an d, wobei das Verhältnis von b:c:d 1:1:1 bis 2,5:1,25:1 Gew.-Teile beträgt.

Die neuen flüssigen Zubereitungen enthalten in der Regel – bezogen auf die Zubereitung aus a+b+c+d+e) – 20 bis 45 Gew.-% a, 2 bis 11 Gew.-% b, 2 bis 5,5 Gew.-% c, 2 bis 4,5 Gew.-% d und 42,5 bis 74 Gew.-% e.

Bevorzugt sind Zubereitungen, die – bezogen auf a+b+c+d+e – 22 bis 28 Gew.-% a, 4 bis 16 Gew.-% b; 4 bis 8 Gew.-% c, 4 bis 8 Gew.-% d und 40 bis 66 Gew.-% e enthalten.

Die neuen Zubereitungen werden durch Mischen der Komponenten in der bzw. den gewünschten organischen Flüssigkeiten erhalten. Zweckmässigerweise trägt man das feinteilige Pigment a in die Mischung aus b+c+d in e ein, da man so direkt die flüssige Zubereitung erhält. Man kann auch zunächst a in e eintragen. Dabei entsteht eine dickflüssige bis feste zähe Paste, die beim Einarbeiten von b+c+d dann flüssig wird.

Die vorliegende Erfindung soll durch die folgenden Ausführungsbeispiele weiter erläutert werden. Die im folgenden angegebenen Teile und Prozentangaben beziehen sich auf das Gewicht. Die Viskosität der Zubereitungen wurde durch die Auslaufzeit der Zubereitung in Sekunden aus dem DIN-Becher mit der 6-mm-Düse angegeben.

*A. Coloristische Prüfung der Zubereitungen*

*A* 1 Lack

Zur Beurteilung der coloristischen Eigenschaften der in den Zubereitungen enthaltenen Pigmente wurde mit den Zubereitungen Lacke in 2 verschiedenen Lacksystemen hergestellt.

Lack 1: Einbrennlack auf Basis Alkydharnstoff/Melaminharz (Lösungsmittel: Xylol/Butanol-Gemisch)

Lack 2: langöliges lufttrocknendes Alkydharz (®Alkydal F 681) (Lösungsmittel: Testbenzin)

Die zur Herstellung der Färbungen (Lackierungen) verwendeten Lacke wurden wie folgt hergestellt:

1.1 Buntlacke 1 und 2 (Pigmentgehalt: 10%) wurden aus den Zubereitungen durch 2stufiges Auflacken hergestellt. Hierzu wird die 10 g Pigment entsprechende Menge Pigmentzubereitung, gegebenenfalls nach dem Einstellen auf 20% Pigmentgehalt, mit der in der folgenden Tabelle angegebenen Menge Lack 1 bzw. Lack 2 mit der angegebenen Bindemittelkonzentration in 2 Stufen verdünnt.

*(Tabelle auf der nächsten Seite)*

In Stufe I wird der Lack 2 min langsam mit einem Lamellenrührer eingerührt. In Stufe II wird das Gemisch 3 min bei 2000 tr/min gerührt.

1.2 Purtonlacke 1 und 2 (5% Pigment); 25 g Buntlack 1 bzw. 2 aus *A* 1.1 werden mit 25 g Lack

| Auflackung Stufe | Pigment-Zubereitung* | Lack 1 | | Lack 2 | |
|---|---|---|---|---|---|
| | | (g) | Bindemittel (%) | (g) | Bindemittel (%) |
| I | 50 | 25 | 21,5 | 25 | 25 |
| II | | 25 | 43 | 25 | 50 |

* 20%ig an Pigment.

1 bzw. Lack 2 mit 35% Bindemittelgehalt homogen gemischt.

1.3 Weissverschnitt - Lack 1; 4 g Purtonlack 1 aus *A* 1.2 werden mit 20 g Weisslack (40%ig Titandioxid) homogen gemischt.

1.4 Weissverschnitt - Lack 2; 2 g Purtonlack 2 aus *A* 1.2 werden mit 20 g Weisslack (20%ig Titandioxid) und 18 Tropfen Härtungsmittel homogen gemischt.

1.5 Vergleichspurtonlacke 1 und 2 (5% Pigment); 5 g Vergleichspigment und 95 g Lack 1 bzw. Lack 2 (Bindemittelgehalt: 35%) werden nach dem Zufügen von 100 ml Glaskugeln (⌀3 mm) auf einer Schüttelmühle (®Red Devil) 60 min geschüttelt.

Der Lack wird von den Glaskugeln abgesiebt.

1.6 Weissverschnitt - Lack 1 (Vergleich); 4 g Purtonlack 1 aus *A* 1.5 werden mit 20 g Weisslack (40%ig Titandioxid) homogen gemischt.

1.7 Weissverschnitt - Lack 2 (Vergleich); 2 g Purtonlack 2 aus *A* 1.5 werden mit 20 g Weisslack (20%ig Titandioxid) und 18 Tropfen Härtungsmittel homogen gemischt.

*A* 2 Färbungen und deren Auswertung

2.1 Lack 1 - Volltonlackierung; der Purtonlack 1 aus *A* 1.2 bzw. *A* 1.5 wird mit einer 150-µm-Spiralrakel auf Kontrastkarton abgezogen.

Nach dem Ablüften (20 min) wird die Färbung bei 120°C eingebrannt (15 min).

2.2 Lack 2 - Volltonlackierung; 10 g Purtonlack 2 aus *A* 1.2 bzw. *A* 1.5 werden mit 0,2 g Härtungsmittel homogen gemischt. Der Lack wird mit einer 150-µm-Spiralrakel auf Kontrastblech abgezogen und an der Luft getrocknet.

2.3 Weissverschnitt - Lack 1; der Lack aus *A* 1.3 und *A* 1.6 wird mit einer 150-µm-Spiralrakel auf Karton abgezogen und die Färbung nach dem Ablüften (20 min) bei 120°C eingebrannt (15 min).

2.4 Weissverschnitt - Lack 2; der Lack aus *A* 1.4 und *A* 1.7 wird mit einer 150-µm-Spiralrakel auf Karton abgezogen und an der Luft getrocknet.

2.5 Die nach *A* 2.1 und *A* 2.2 erhaltenen Volltonlackierungen werden visuell nach Glanz, Helligkeit und Lasur im Vergleich zu entsprechenden Färbungen von Vergleichspigmenten (=Stand der Technik) beurteilt.

2.6 Die nach *A* 2.3 und *A* 2.4 erhaltenen Weissverschnittfärbungen wurden nach dem Cielab-System (Dr. Fritz Heinrich, defazet 1977, Nr. 8, S. 318 bis 324) hinsichtlich Farbstärke, Farbton (ΔH) und Reinheit (ΔC) ausgewertet. Die Farbstärke wurde als Färbeäquivalent (FAE) auf die Färbung, die das Vergleichspigment enthält, bezogen (=100).

*Beispiel 1*

60 Teile eines Gemisches aus $C_9$- bis $C_{19}$-Alkylbenzolgemisch und Äthylenglykoläthylätheracetat (70:30 Teilen) mit 5 Teilen $CuPc\text{-}(CH_2-NHC_2H_5)_3$ und 5 Teilen der Verbindung

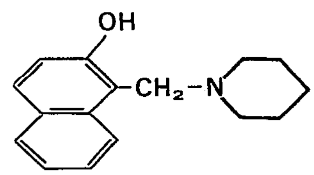

werden 20 Teile feinteiliges CuPc der β-Modifikation (Grösse der Primärteilchen 0,1 µm) eingetragen und homogen gerührt. Dann werden unter Rühren 10 Teile Dodecylbenzolsulfonsäure zugegeben. Man erhält eine flüssige Zubereitung (Auslaufzeit: 11 s), die im Einbrennlack und im Alkydlack sehr farbstarke, farbtonreine brillante Weissverschnittfärbungen und stark lasierende Purtonfärbungen liefert. Die coloristische Auswertung der Zubereitung erfolgt gemäss *A* 1 und *A* 2. Die Ergebnisse sind in der Tabelle I zusammengestellt.

*Beispiel 2*

In eine Mischung aus 60 Teilen des in Beispiel 1 angegebenen Lösungsmittelgemisches e und 1,0 Teilen Dodecylbenzolsulfonsäure b, 5 Teilen $CuPc(CH_2-NHC_2H_5)_{3,5}$ c und 5 Teilen der Verbindung der Formel

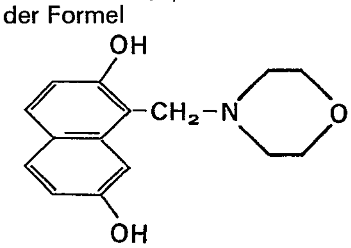

(d)

werden 20 Teile feinteiliges β-CuPc (Primärteilchengrösse <0,1 µm) eingerührt. Die Zubereitung hat eine Auslaufzeit von 5 s. Die coloristische Auswertung erfolgte an den nach *A* 1 und *A* 2 erhaltenen Färbungen. Die Ergebnisse sind in der Tabelle I zusammengestellt.

*Beispiel 3*

In die in Beispiel 2 beschriebene Mischung aus b, c, d in e werden unter Rühren 30 Teile feinteiliges β-CuPc (Primärteilchengrösse <0,1 µm) eingetragen. Man erhält eine flüssige Zubereitung (Viskosität im DIN-Becher 14 s).

Die Auswertung der Färbungen nach *A* 1 und *A* 2 ist in der Tabelle I zusammengestellt.

*Beispiel 4*

In die in Beispiel 2 beschriebene Mischung aus b, c und d in e werden unter Rühren 40 Teile feinteiliges β-CuPc (Primärteilchengrösse <0,1 µm) eingetragen. Man erhält eine noch fliessende, giessbare Zubereitung. Die Ergebnisse der coloristischen Auswertung der nach *A* 1 und *A* 2 erhaltenen Färbungen sind in der Tabelle I zusammengestellt.

*Beispiel 5*

In eine Mischung von 5 Teilen der Verbindung der Formel

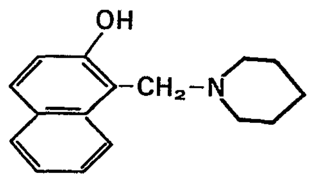

(d), und

5 Teilen 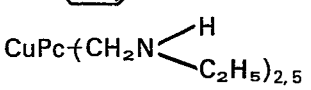

in 60 Teilen eines Gemisches aus Testbenzin und Äthylenglykoläthylätheracetat (70:30 Teilen) werden 20 Teile feinteiliges β-CuPc (Primärteilchengrösse <0,1 µm) eingerührt. Nach dem Zugeben von 10 Teilen Dodecylbenzolsulfonsäure erhält man eine flüssige Pigmentzubereitung. (Viskosität im DIN-Becher 14 s).

Die Auswertung der Färbungen ist in der Tabelle I zusammengestellt.

*Beispiele 6 bis 22*

Man verfährt analog den Angaben in Beispiel 1, 2, 3 oder 5, verwendet jedoch das in Tabelle I in Spalte 2 angegebene Mittel d. Man erhält flüssige Zubereitungen. Die Auslaufzeit der Zubereitungen aus dem DIN-Becher (6-mm-Düse) und die Auswertung der mit den Zubereitungen erhaltenen Färbungen sind in der Tabelle I zusammengestellt.

*Vergleichsbeispiel I*

Zum Vergleich wurden Purtonlacke und Weissverschnitte in den Lacken 1 und 2 mit dem in den Beispielen 1 bis 29 verwendeten Pigment nach *A* 1.5 bis *A* 1.6 hergestellt und die Färbungen gemäss *A* 2 ausgewertet.

Die coloristische Beurteilung ist in den Tabellen I und II enthalten.

*Vergleichsbeispiel II*

Die Zubereitung wird entsprechend den Angaben in Beispiel 2, jedoch ohne d hergestellt.

Die Zubereitung ist dick und tixotrop. Die coloristische Beurteilung der mit der Zubereitung erhaltenen Färbungen ist in den Tabellen I und II enthalten.

*Tabelle I*

| Beispiel | Mittel (d) | Zubereitung Viskosität (s) | Lack 1 | | | | Lack 2 | | | |
|---|---|---|---|---|---|---|---|---|---|---|
| | | | Weissverschnitt | | | Vollton | Weissverschnitt | | | Vollton |
| | | | FAE | ΔH | ΔC | Lasur | FAE | ΔH | ΔC | Lasur |
| 1 | 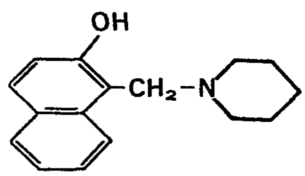 | 11 | 78 | +0,2 | +1,6 | +5 | 58 | +1,2 | +3,6 | +2 |
| 2 | 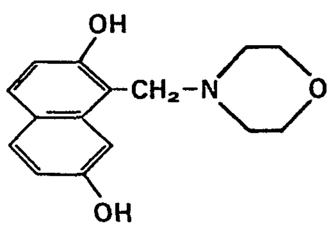 | 5 | 74 | −1,3 | ±0 | +6 | 78 | +0,7 | ±0 | +5 |
| 3 | » | 14 | 74 | −0,7 | +0,3 | +6 | 73 | +1,1 | +0,6 | +4 |
| 4 | » | noch fliessend | 78 | −0,5 | +0,4 | +4 | 79 | +1,3 | +0,4 | +4 |
| 5 | 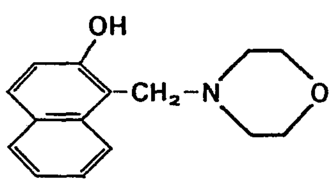 | 14 | 76 | +0,5 | +1,3 | +3 | 78 | +2,9 | +0,9 | +4 |

*Tabelle I (Fortsetzung)*

| Beispiel | Mittel (d) | Zubereitung Viskosität (s) | Lack 1 Weissverschnitt FAE | Lack 1 Weissverschnitt Δ | Lack 1 Weissverschnitt ΔC | Lack 1 Vollton Lasur | Lack 2 Weissverschnitt FAE | Lack 2 Weissverschnitt ΔH | Lack 2 Weissverschnitt ΔC | Lack 2 Vollton Lasur |
|---|---|---|---|---|---|---|---|---|---|---|
| 6 | 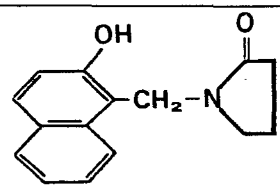 | 6 | 80 | +0,2 | +1,5 | +5 | 80 | +2,3 | +1,2 | +2 |
| 7 | 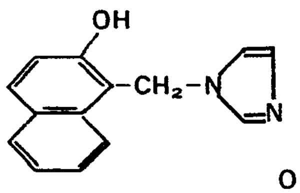 | 8 | 81 | +0,4 | +1,4 | +5 | 65 | +1,9 | +3,0 | +2 |
| 8 | 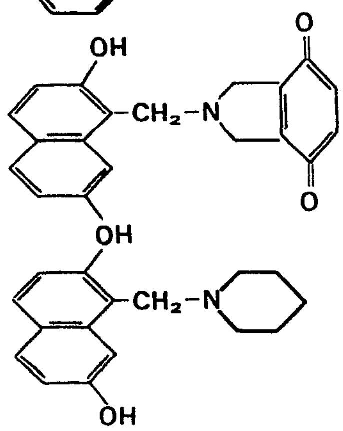 | 8 | 85 | ±0 | +1,8 | +5 | 77 | +2,2 | +1,4 | +2 |
| 9 | | 5 | 74 | −0,1 | +1,4 | +5 | 58 | +1,4 | +3,2 | +2 |
| Vgl. II | O | dick tixotrop | 88 | +0 | +0,2 | +2 | 95 | +0,9 | −0,5 | +3 |
| Vgl. I | nach *A* 1.5; *A* 1.6 und *A* 1.7 | — | 100 | H 235,8 | C 39,7 | 0 | 100 | H 230,9 | C 37,7 | 0 |
| 10 | 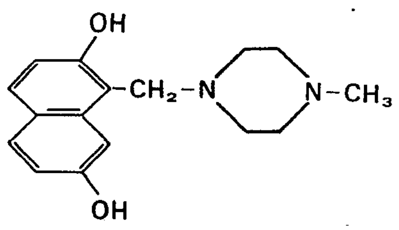 | 7 | 83 | +0,3 | +1,0 | +5 | 95 | +2,9 | ±0 | +4 |
| 11 | 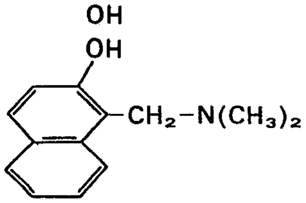 | 6 | 84 | +0,4 | +1,2 | +5 | 64 | +1,5 | +3,1 | +3 |
| 12 | 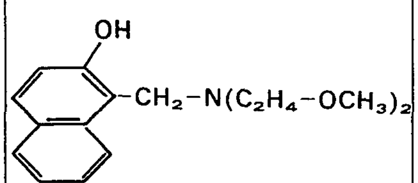 | 6 | 79 | +0,4 | +1,6 | +5 | 58 | +1,4 | +3,7 | +2 |
| Vgl. II | O | dick tixotrop | 88 | +0 | +0,2 | +2 | 95 | +0,9 | −0,5 | +3 |

*Tabelle I (Fortsetzung)*

| Bei-spiel | Mittel (d) | Zubereitung Viskosität (s) | Lack 1 | | | | Lack 2 | | | |
|---|---|---|---|---|---|---|---|---|---|---|
| | | | Weissverschnitt | | | Vollton | Weissverschnitt | | | Vollton |
| | | | FAE | ΔH | ΔC | Lasur | FAE | ΔH | ΔC | Lasur |
| Vgl. I | nach *A* 1.5; *A* 1.6 und *A* 1.7 | — | 100 | H 235,8 | C 39,7 | 0 | 100 | H 230,9 | C 37,7 | 0 |

*Tabelle I (Fortsetzung)*

| Bei-spiel | Mittel (d) 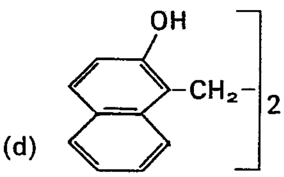 | Zubereitung Viskosität (s) | Lack 1 | | | | Lack 2 | | | |
|---|---|---|---|---|---|---|---|---|---|---|
| | | | Weissverschnitt | | | Vollton | Weissverschnitt | | | Vollton |
| | | | FAE | ΔH | ΔC | Lasur | FAE | ΔH | ΔC | Lasur |
| 13 | $>N-(CH_2)_3-N(CH_3)_2$ | 6 | 84 | +0,2 | +1,1 | +6 | 83 | +2,6 | +1,1 | +3 |
| 14 | $>N-(CH_2)_3-O-CH_2-CH_2-OC_4H_9$ | 6 | 78 | +0,2 | +1,4 | +5 | 74 | +1,9 | +2,0 | +2 |
| 15 | $>N-CH_2-CH_2-OH$ | 8 | 83 | −0,2 | +1,1 | +5 | 85 | +2,3 | +0,9 | +2 |
| 16 | $>N-CH_2-$ 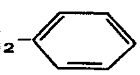 | 7 | 78 | +0,5 | +1,6 | +5 | 69 | +1,5 | +3,3 | +3 |
| 17 | $>N-(CH_2)_3-$ 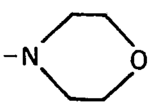 | 5 | 92 | +0,6 | +0,9 | +6 | 65 | +1,5 | +2,8 | +3 |
| 18 | 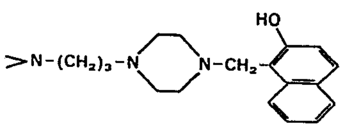 | 5 | 79 | +0,4 | +1,6 | +6 | 65 | +1,7 | +2,7 | +3 |
| 19 | 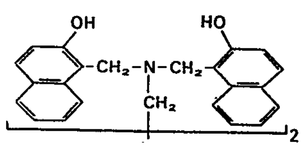 | 23 | 88 | +0,4 | +1 | +6 | 86 | +2,2 | +0,8 | +2 |
| 20 | 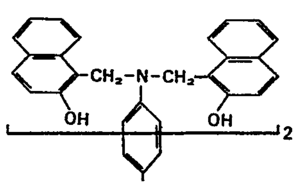 | 8 | 76 | −1,1 | +0,3 | +6 | 67 | −1,6 | +0,6 | +2 |
| 21 | 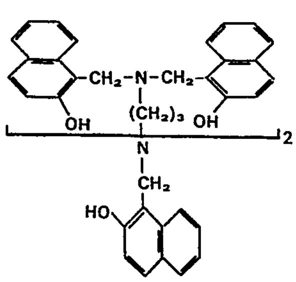 | 5 | 80 | +0,3 | 1,2 | +5 | 76 | +2,5 | +1,2 | +3 |

*Tabelle I (Fortsetzung)*

| Beispiel | Mittel (d) | Zubereitung Viskosität (s) | Lack 1 | | | | Lack 2 | | | |
|---|---|---|---|---|---|---|---|---|---|---|
| | | | Weissverschnitt | | | Vollton | Weissverschnitt | | | Vollton |
| | | | FAE | ΔH | ΔC | Lasur | FAE | ΔH | ΔC | Lasur |
| 22 | 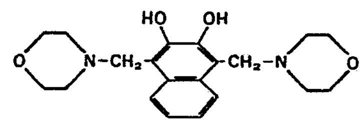 | 8 | 100 | −0,4 | −0,9 | +5 | 102 | +1,2 | +1,1 | +6 |

*Beispiele 23 bis 29*

Die Zubereitungen werden durch Eintragen von feinteiligem CuPc (β-Modifikation, Primärteilchengrösse ≤0,1 µm) a in eine vorgelegte Lösung (Suspension von b, c und d in e erhalten).

Als b wurde 4-Dodecylbenzolsulfonsäure, als c

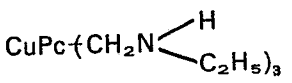

und als d 1-Morpholinomethylen-2-hydroxynaphthalin verwendet.

Die Mengen an a, b, c, d und e sind in den Spalten 2 bis 6 der Tabelle II angegeben. Die Viskosität der so erhaltenen Zubereitungen ist in Spalte 7 der Tabelle angegeben. Die coloristische Beurteilung der mit den Zubereitungen erhaltenen Färbungen mit den Lacken 1 und 2 (vgl. *A* 1 und *A* 2) sind in den Spalten 8 bis 15 der Tabelle II zusammengefasst.

*Tabelle II*

| Beispiel | Zubereitung | | | | | | Coloristische Beurteilung | | | | | | | |
|---|---|---|---|---|---|---|---|---|---|---|---|---|---|---|
| | Menge an | | | | | Viskosität (s) | Lack 1 Weissverschnitt | | | Purton Lasur | Lack 2 Weissverschnitt | | | Purton Lasur |
| | a (g) | b (g) | c (g) | d (g) | e (g) | | FAE | ΔH | ΔC | | FAE | ΔH | ΔC | |
| 23 | 20 | 2 | 2 | 2 | 74 | 20 | 93 | +0,8 | −0,2 | +5 | 72 | +1,9 | +1,5 | +4 |
| 24 | 20 | 10 | 10 | 10 | 50 | 26 | 82 | −0,7 | −0,1 | +6 | 55 | −0,8 | +3,3 | +6 |
| 25 | 20 | 10 | 5 | 10 | 55 | 14 | 77 | −0,1 | +0,4 | +5 | 64 | +0,4 | +0,2 | +5 |
| 26 | 20 | 4 | 2 | 2 | 72 | 9 | 78 | −0,6 | +0,1 | +4 | 90 | +2 | −0,7 | +5 |
| 27 | 20 | 20 | 10 | 10 | 40 | 167 | 79 | −2,4 | −0,5 | +6 | 79 | −0,8 | −0,1 | +6 |
| 28 | 20 | 5 | 5 | 10 | 60 | 8 | 114 | −0,1 | −0,3 | +5 | 58 | ±0 | +2,7 | +6 |
| 29 | 25 | 8 | 4 | 3,5 | 59,5 | 14 | 76 | +0,5 | +1,3 | +3 | 78 | +2,9 | +0,9 | +4 |
| Vgl. II | 20 | 10 | 5 | 0 | 65 | dick tixotrop | 88 | ±0 | +0,2 | +2 | 95 | +0,9 | −0,5 | +3 |
| | | | | | | | | H | C | | | H | C | 0 |
| Vgl. I | (nach *A* 1.5; *A* 1.6, *A* 1.7) | | | | | — | 100 | 235,8 | 39,7 | 0 | 100 | 230,9 | 37,7 | (Vgl.) |

*Beispiele 30 und 31*

Die Zubereitungen werden wie in Beispiel 23 angegeben hergestellt, jedoch wird als a feinteiliges CuPc-Pigment der α-Modifikation (Primärteilchengrösse ≤0,5 µm, BET-Oberfläche 60 $m^2$/g aus $N_2$-Absorption) verwendet.

Die Mengen an a, b, c, d und e sind in der Tabelle III angegeben (Spalten 2 bis 6). In der Tabelle III ist die Viskosität der Zubereitung in Spalte 7 und die coloristische Beurteilung der mit der Zubereitung erhaltenen Färbungen in den Spalten 8 bis 15 angegeben.

*Vergleichsbeispiel III*

Zum Vergleich wurden Purtonfarben und Weissverschnitte in den Lacken 1 und 2 mit dem in Beispiel 30 verwendeten Pigment gemäss *A* 1.5 bis *A* 1.7 hergestellt und die Färbungen gemäss *A* 2 hergestellt und ausgewertet. Die coloristische Beurteilung ist in der Tabelle III zusammengestellt.

*Beispiele 32 und 33*

Die Zubereitungen werden wie in Beispiel 23 angegeben hergestellt, jedoch wird anstelle von CuPc-Pigment ein feinteiliges Indanthronpigment (α-Modifikation, Primärteilchengrösse <0,1 µm) verwendet. Die Viskosität der Zubereitungen ist in der Tabelle III angegeben. Die coloristische Beurteilung sind in den Spalten 8 bis 15 der Tabelle III zusammengestellt.

*Vergleichsbeispiel IV*

Nach *A* 1.5 bis *A* 1.7 wurden Purtonfarben und Weissverschnitte mit den bei den Beispielen 32 und 33 verwendeten Indanthronpigment in den Lacken 1 und 2 hergestellt. Die Färbungen wurden nach *A* 2 hergestellt und ausgewertet. Das Ergebnis der coloristischen Auswertung ist in der Tabelle III, Spalten 8 bis 15 angegeben.

*Tabelle III*

| Beispiel | Zubereitung: Menge an a (g) | b (g) | c (g) | d (g) | e (g) | Viskosität (s) | Coloristische Beurteilung: Lack 1 Weissverschnitt FAE | ΔH | ΔC | Purton Lasur | Lack 2 Weissverschnitt FAE | ΔH | ΔC | Purton Lasur |
|---|---|---|---|---|---|---|---|---|---|---|---|---|---|---|
| 30 | 20 | 10 | 5 | 5 | 60 | 5 | 66 | −1,3 | +0,6 | +4 | 50 | −1,1 | +3 | +5 |
| 31 | 25 | 8 | 4 | 3,5 | 59,5 | 13 | 73 | +0,8 | +1,2 | +4 | 50 | −0,1 | +3,9 | +4 |
| | | | | | | | | H | C | | | H | C | |
| Vgl. III | | | | | | — | 100 | 243,8 | 38,9 | 0 | 100 | 238,1 | 33,8 | 0 (Vgl.) |
| | | | | | | | | ΔH | ΔC | | | ΔH | ΔC | |
| 32 | 20 | 10 | 5 | 5 | 60 | 6 | 47 | −3,0 | +2,9 | +6 | 47 | −2,6 | +3,4 | +5 |
| 33 | 25 | 8 | 4 | 3,5 | 59,5 | 28 | 56 | −3,0 | +2,5 | +6 | 56 | −1,9 | +3,9 | +5 |
| | | | | | | | | H | C | | | H | C | |
| Vgl. IV | | | | | | | 100 | 262,8 | 30,1 | 0 | 100 | 260,5 | 27,1 | 0 (Vgl.) |

**Patentansprüche**

1. Flüssige, stabile Zubereitungen, enthaltend

a) feinteiliges Kupferphthalocyanin der α- oder β-Modifikation oder feinteiliges Indanthron,

b) mindestens eine $C_6$- bis $C_{18}$-Alkylbenzolsulfonsäure,

c) ein basisches Kupferphthalocyanin der Formel

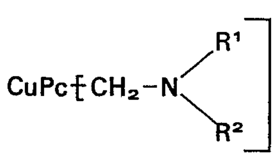

n,

in der CuPc ein n-wertiger Rest des Kupferphthalocyanins, $R^1$ und $R^2$ unabhängig voneinander Wasserstoff oder $C_1$- bis $C_8$-Alkyl und n 1, 2, 3 oder 4 bedeuten,

d) Verbindungen, die durch Mannich-Kondensation aus 2-Hydroxynaphthalin, das gegebenenfalls noch 1 oder 2 weitere β-ständige Hydroxygruppen enthält, Formaldehyd und primären oder sekundären aliphatischen, cycloaliphatischen oder aromatischen Mono-, Di-, Tri- oder Polyaminen oder 5- oder 6gliedrigen heterocyclischen Verbindungen, die eine NH-Gruppe als Ringglied aufweisen, erhalten werden, und die 1 bis 6 β-Hydroxynaphthylgruppen enthalten, und

e) eine oder mehrere organische Flüssigkeiten, wobei das Gewichtsverhältnis von (b):(c):(d) 1:1:1 bis 2,5:1,25:1 ist und die Menge an (d) 10 bis 50 Gew.-%, bezogen auf (a), beträgt.

2. Zubereitungen gemäss Anspruch 1, dadurch gekennzeichnet, dass diese als d eine oder mehrere Verbindungen der allgemeinen Formel

$$R^3-CH_2-X$$

enthalten, in der $R^3$ 2-Hydroxynaphthyl-1, das gegebenenfalls 1 oder 2 weitere β-ständige Hydroxygruppen trägt, oder

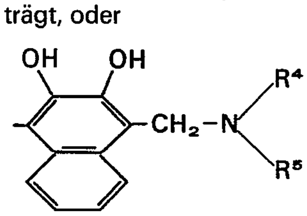

und X einen Rest der Formel

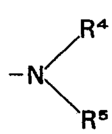

oder

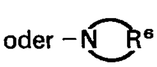

bedeuten,

worin $R^4$ und $R^5$ für je einen aliphatischen oder phenylaliphatischen Rest, wobei $R^4$ und $R^5$ gleich oder verschieden sein können, oder $R^5$ für eine Gruppe der Formel $-CH_2-R^3$, und $R^4$ für eine Gruppe der Formel

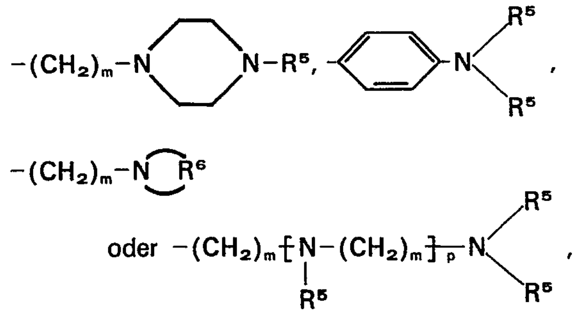

m für 2 oder 3, p für 0, 1 oder 2, $-NR^6$ für einen gesättigten oder ungesättigten 5- oder 6gliedrigen heterocyclischen Ring, der gegebenenfalls >O oder $>N-R^7$ als weitere Ringglieder und/oder eine oder zwei >O=O-Gruppen aufweist und $R^7$ für $C_1$- bis $C_4$-Alkyl stehen.

3. Zubereitungen gemäss Anspruch 2, dadurch gekennzeichnet, dass diese als (d) eine oder mehrere Verbindungen der im Anspruch 2 angegebenen Formel enthalten, in der $R^3$ 2-Hydroxynaphthyl oder 2,7-Dihydroxynaphthyl, und

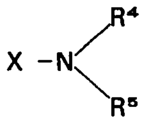 bedeuten, wobei $R^5$ für $-CH_2-R^3$

und $R^4$ für

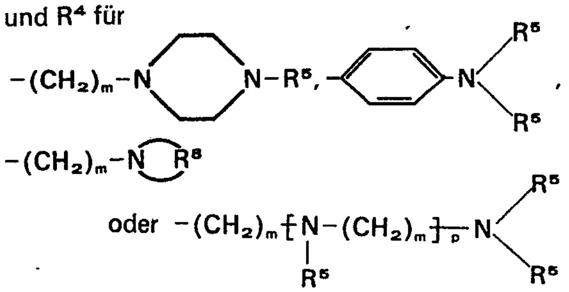

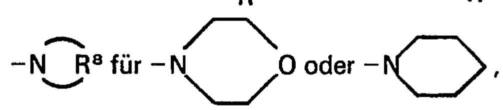

m für 2 oder 3 und p für 0, 1 oder 2 stehen.

4. Zubereitungen gemäss Anspruch 1, dadurch gekennzeichnet, dass diese als (d) eine oder mehrere Verbindungen der Formel

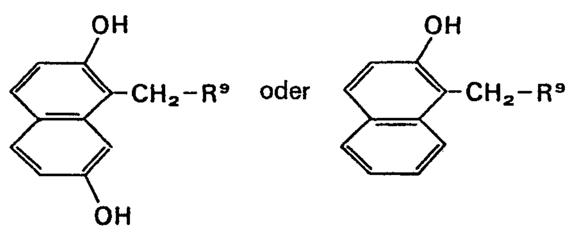

enthalten, in denen $R^9$ für N-Morpholinyl, N-Piperidinyl, N-Pyrrolidonyl, N-Pyrazolyl, N-Phthalimido, n-(N'-Methylpyrazinyl), N-(N'-Äthylpyrazinyl), Dimethylamino, Diäthylamino, Dipropylamino, Dibutylamino, Di-(2-methoxyäthyl)amino, Di-(2-äthoxyäthyl)amino, Di-(2-propoxyäthyl)amino, Di-(2-butoxyäthyl)amino, Di-(3-methoxypropyl)amino, Di-(3-äthoxypropyl)amino, Di-(3-butoxypropyl)amino, Di-(2-hydroxyäthylamino) oder Dibenzylamino steht.

5. Zubereitungen gemäss Anspruch 1, 2, 3 oder 4, dadurch gekennzeichnet, dass diese – bezogen auf (a+b+c+d+e) – 20 bis 45 Gew.-% (a), 2 bis 11 Gew.-% (b), 2 bis 5,5 Gew.-% (c), 2 bis 4,5 Gew.-% (d) und 42,5 bis 74 Gew.-% (e) enthalten.

6. Verwendung der Zubereitungen gemäss den Ansprüchen 1 bis 5 zum Färben von Lacken.

## Revendications

1. Compositions liquides stables contenant:

a) une phtalocyanine de cuivre sous la forme α ou β à l'état de fines particules ou de l'indanthrone en fines particules,

b) au moins un acide (alkyle en $C_6$-$C_{18}$-benzènesulfonique,

c) une phtalocyanine de cuivre basique de formule

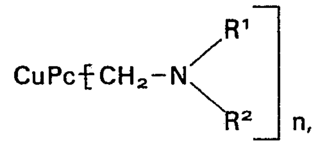

dans laquelle CuPc représente un reste de valence, n de la phtalocyanine de cuivre, $R^1$ et $R^2$ représentent chacun, indépendamment l'un de l'autre, l'hydrogène ou un groupe alkyle en $C_1$-$C_8$ et n est égal à 1, 2, 3 ou 4,

d) des composés qui ont été obtenus par une condensation de Mannich à partir du 2-hydroxynaphtalène contenant encore le cas échéant 1 ou 2 autres groupes hydroxy en position β, à partir du formaldéhyde et de mono-, di-, tri- ou polyamines aliphatiques, cycloaliphatiques ou aromatiques primaires ou secondaires ou de composés hétérocycliques à 5 ou 6 chaînons contenant un groupe NH en tant que chaînon cyclique, et qui contiennent de 1 à 6 groupes β-hydroxynaphtyle, et

e) un ou plusieurs liquides organiques, les proportions relatives en poids (b):(c):(d) allant de 1:1:1 à 2,5:1,25:1 et la quantité de (d) représentant de 10 à 50% en poids par rapport à (a).

2. Compositions selon la revendication 1, caractérisées en ce qu'elles contiennent en tant que composant (d) un ou plusieurs composés de formule générale

$$R^3-CH_2-X$$

dans laquelle $R^3$ représente un groupe 2-hydroxynaphtyle-1 portant le cas échéant 1 ou 2 autres groupes hydroxy en position β, ou bien

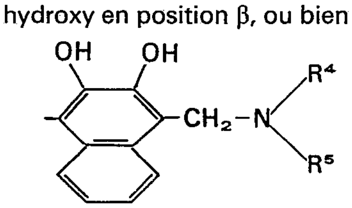

et X représente un reste de formule

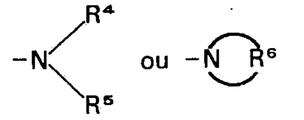

formules dans lesquelles $R^4$ et $R^5$ représentent chacun un reste aliphatique ou phénylaliphatique, $R^4$ et $R^5$ pouvant être identiques ou différents, ou bien $R^5$ représente un groupe de formule $-CH_2R^3$ et $R^4$ représente un groupe de formule

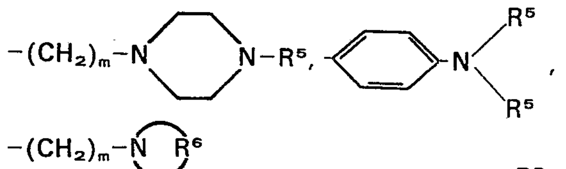

ou 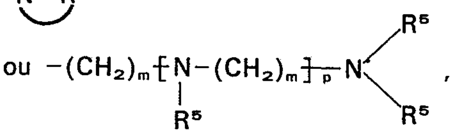

m est égal à 2 ou 3, p est égal à 0, 1 ou 2 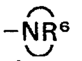 représente un noyau hétérocyclique saturé ou insaturé à 5 ou 6 chaînons contenant le cas échéant $>O$ ou $>N-R^7$ comme autre chaînon cyclique et/ou un ou deux groupes $>C=O$, et $R^7$ représente un groupe alkyle en $C_1$-$C_4$.

3. Compositions selon la revendication 2, caractérisées en ce qu'elles contiennent en tant que composant (d) un ou plusieurs composés répondant à la formule indiquée dans la revendication 2 dans laquelle $R^3$ représente un groupe 2-hydroxynaphtyle ou 2,7-dihydroxynaphtyle et X représente

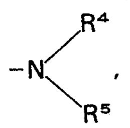

$R^5$ représentant $-CH_2-R^3$ et $R^4$ représentant

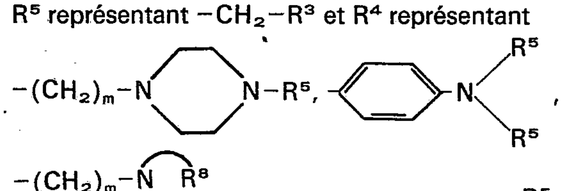

ou 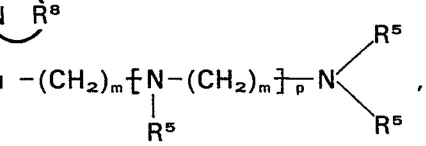

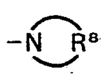 représentant 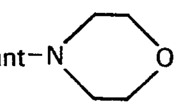 ou 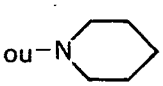,

m étant égal à 2 ou 3 et p étant égal à 0, 1 ou 2.

4. Compositions selon la revendication 1, caractérisées en ce qu'elles contiennent en tant que composant (d) un ou plusieurs composés de formule

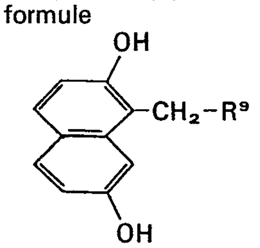 ou 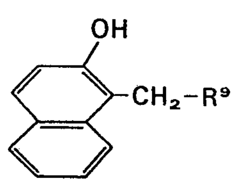

dans lesquelles $R^9$ représente un groupe N-morpholinyle, N-pipéridinyle, N-pyrrolidonyle, N-pyrazolyle, N-phtalimido, n-(N'-méthylpyrazinyle), N-(N'-éthylpyrazinyle), diméthylamino, diéthylamino, dipropylamino, dibutylamino, di-(2-méthoxyéthyl)amino, di-(2-éthoxyéthyl)-amino, di-(2-propoxyéthyl)amino, di-(2-butoxyéthyl)amino, di-(3-méthoxypropyl)amino, di-(3-éthoxypropyl)amino, di-(3-butoxypropyl)amino, di-(2-hydroxyéthyl)amino ou dibenzylamino.

5. Compositions selon l'une quelconque des revendications 1 à 4, caractérisées en ce qu'elles contiennent – par rapport à (a+b+c+d+e) 20 à 45% en poids de (a), 2 à 11% en poids de (b), 2 à 5,5% en poids de (c), 2 à 4,5% en poids de (d) et 42,5 à 74% en poids de (e).

6. Utilisation des compositions selon les revendications 1 à 5, pour la coloration de peintures.

## Claims

1. A fluid, stable formulation which contains

(*a*) finely divided copper phthalocyanine in the α- or β-modification, or finely divided indanthrone,

(*b*) a least one $C_6$-$C_{18}$-alkylbenzenesulfonic acid,

(*c*) a basic copper phthalocyanine of the formula

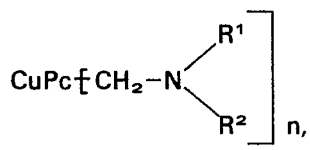

where CuPc is an n-valent radical of copper phthalocyanine, $R^1$ and $R^2$ independently of one another are hydrogen or $C_1$-$C_8$-alkyl, and n is 1, 2, 3 or 4,

(*d*) compounds which are obtained by Mannich condensation of 2-hydroxynaphthalene, which may or may not contain 1 or 2 additional β-hydroxyl groups, formaldehyde and primary or secondary aliphatic, cycloaliphatic or aromatic monoamines, diamines, triamines or polyamines or 5- or 6-membered heterocyclic compounds which contain an NH group as a ring member, and which contain from 1 to 6 β-hydroxynaphthyl groups, and

(*e*) one or more organic liquids, the weight ratio of (*b*): (*c*): (*d*) being from 1:1:1 to 2.5:1.25:1 and the amount of (*d*) being from 10 to 50% by weight, based on (*a*).

2. A formulation as claimed in claim 1, which contains, as (*d*), one or more compounds of the general formula

$$R^3-CH_2-X$$

where $R^3$ is 2-hydroxynaphthyl-1-yl, which may or may not contain 1 or 2 additional β-hydroxyl groups, or is

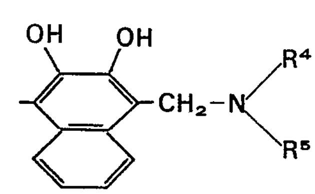

and X is a radical of the formula

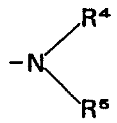 or 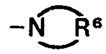

where $R^4$ and $R^5$ are identical or different and each is an aliphatic or phenylaliphatic radical, or $R^5$ is $-CH_2-R^3$, and $R^4$ is

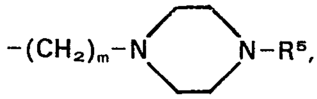 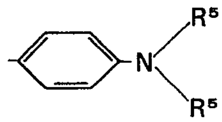 ,

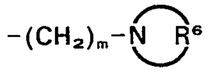

or 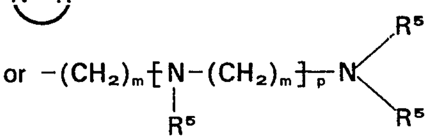 ,

m is 2 or 3, p is 0, 1 or 2, 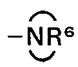 is a saturated or unsaturated 5- or 6-membered heterocyclic ring, which may or may not contain $-O-$ or $>N-R^7$ as additional ring members and/or contain one or two $>C=O$ groups, and $R^7$ is $C_1$-$C_4$-alkyl.

3. A formulation as claimed in claim 2, which contains, as (*d*), one or more compounds of the formula given in claim 2, where $R^3$ is 2-hydroxynaphthyl or 2,7-dihydroxynaphthyl, and

X is 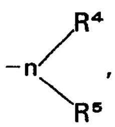 , $R^5$ being $-CH_2-R^3$ and $R^4$ being

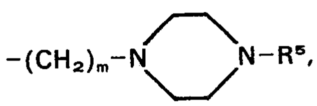 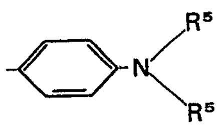 ,

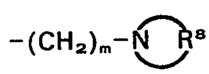

or 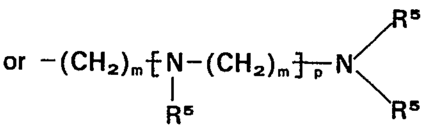 ,

and

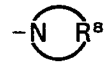 being 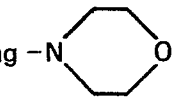 or 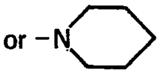 ,

m is 2 or 3 and p is 0, 1 or 2.

4. A formulation as claimed in claim 1, which contains, as (*d*), one or more compounds of the formula

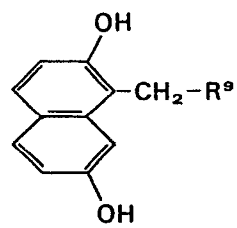 or 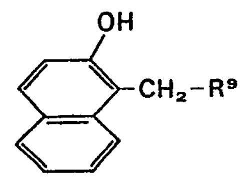

where $R^9$ is N-morpholinyl, N-piperidinyl, N-pyrrolidonyl, N-pyrazolyl, N-phtalimido, n-(N'-methylpyrazinyl), N-(N'-ethylpyrazinyl), dimethylamino, diethylamino, dipropylamino, dibutylamino, di-(2-methoxyethyl)amino, di(2-ethoxyethyl)amino, di-(2-propoxyethyl)amino, di-(2-butoxyethyl)amino, di-(3-methoxypropyl)amino, di-(3-ethoxypropyl)amino, di-(3-butoxypropyl)-amino, di-(2-hydroxyethyl)amino or dibenzylamino.

5. A formulation as claimed in claim 1, 2, 3 or 4, which contains from 20 to 45% by weight of (*a*), from 2 to 11% by weight of (*b*), from 2 to 5.5% by weight of (*c*), from 2 to 4.5% by weight of (*d*), and from 42.5 to 74% by weight of (*e*), in each case based on (*a*+*b*+*c*+*d*+*e*).

6. The use of a formulation as claimed in claims 1 to 5 for coloring surface coatings.